Europäisches Patentamt

European Patent Office

Office européen des brevets

(11) Veröffentlichungsnummer: **0 007 627**
**B1**

(12) **EUROPÄISCHE PATENTSCHRIFT**

(45) Veröffentlichungstag der Patentschrift: 28.04.82

(51) Int. Cl.³: **G 02 B 5/32, G 01 J 1/04**

(21) Anmeldenummer: 79102650.3

(22) Anmeldetag: 25.07.79

(54) Optisches Empfangssystem.

(30) Priorität: 28.07.78 DE 2833261

(43) Veröffentlichungstag der Anmeldung:
06.02.80 Patentblatt 80/3

(45) Bekanntmachung des Hinweises auf die Patenterteilung:
28.04.82 Patentblatt 82/17

(84) Benannte Vertragsstaaten:
BE CH FR GB IT NL SE

(56) Entgegenhaltungen:

US - A - 3 348 058
US - A - 3 453 035
US - A - 4 054 356
US - A - 4 072 395
APPLIED OPTICS, Vol 10, Nr. 3, März 1971,
Seiten 609—618,
New York, USA
J.N. LATTA: "Computer-Based Analysis of
Hologram Imagery and Aberrations: II:
Aberrations Induces by a Wavelength Shift"

(73) Patentinhaber: SIEMENS AKTIENGESELLSCHAFT
Berlin und München
Postfach 22 02 61
D-8000 München 22 (DE)

(72) Erfinder: Blankenfeld, Heinz, Dipl.-Phys.
Kriegerstrasse 24a
D-8034 Germering (DE)
Erfinder: Grage, Ludger
Ganghoferstrasse 19
D-8031 Eichenau (DE)
Erfinder: Jongh de, Rudi
Naabstrasse 23
D-8200 Rosenheim (DE)

(56) Entgegenhaltungen:
APPLIED OPTICS; Vol. 13, Nr. 12, Dezember
1974, Seiten 2924—2930,
New York, USA
A.K. RICHTER et al: "Holographically Generated
Lens"
NOUVELLE REVUE D'OPTIQUE, Vol. 6, Nr. 3,
1975, Seiten 137—147,
Paris, FR
Y. BELVAUX: "Influence des Divers Paramêtres
D'enregistrement Lors de la Restitution d'un
Hologramme"

Courier Press, Leamington Spa, England.

Optisches Empfangssystem

Die Erfindung betrifft ein optisches Empfangssystem, mit einem Detektor als Signalempfänger und einem optischen Hilfsmittel zur Vergrößerung der Apertur des Detektors.

Bei optischen Empfangssystemen wird vielfach die Detektorfläche durch optische Hilfsmittel vergrößert, um einerseits die Empfangsleistung zu erhöhen und andererseits die Signalfluktuation aufgrund atmosphärischer Szintillation zu unterdrücken. Bei Vorschalten von Glaslinsen vor einen Detektor wird zwar die Apertur vergrößert, aber das Gesichtsfeld verkleinert. Es gibt bisher keine Möglichkeit, bei gegebener Detektorfläche mit einer Linse sowohl eine große Apertur als auch ein großes Gesichtsfeld zu erhalten.

Der Erfindung liegt daher die Aufgabe zugrunde, bei einem optischen Empfangssystem eine Vergrößerung der Apertur des Detektors unter Beibehaltung eines möglichst großen Gesichtsfeldes zu erreichen.

Diese Aufgabe wird bei einem optischen Empfangssystem der eingangs genannten Art gemäß der Erfindung dadurch gelöst, daß als optisches Hilfsmittel ein dem Detektor vorgesetztes, einfallen des Licht auf die Detektorfläche sammeludes Hologramm vorgesehen ist.

Die Erfindung geht von der Erkenntis aus, daß man mit Hilfe eines Hologramms jede beliebige Wellenform erzeugen kann, so auch eine einlaufende Kugelwelle, wie sie eine Sammellinse erzeugt. Ein einem Detektor vorgesetztes Hologramm mit sammeluder Wirkung kann optisch gesehen auch als dem Detektor vorgelagertes Beugungsgitter betrachtet werden, an dem einfallende Wiedergabewellen gebeugt werden. Auf diese Weise wird mittels eines einem Detektor vorgesetzten Hologramms wie bei einer Linse die Apertur vergrößert, wobei man im Gegensatz zur Linse jedoch auch einen großen Gesichtsfeldwinkel erhält.

Eine bildfehlerlose Rekonstruktion erfolgt beim Hologramm zwar nur mit einer Wiedergabewelle, welche die Aufnahmewellenlänge besitzt, doch da der Detektor nur die Strahlintensität verarbeitet, können Bildverzerrungen in Kauf genommen werden. Die Apertur des Gesamtsystems wird durch die Hologrammgröße und diese durch die Aufnahmegeometrie des Hologramms bestimmt.

Zur Verbesserung des Wirkungsgrades eines bei der Erfindung als abbildendes optisches Bauteil eingesetzten Hologramms ist es vorteilhaft, wenn das Hologramm ein Phasenhologramm ist.

Die Erfindung wird im folgenden anhand einer Zeichnung näher beschrieben.

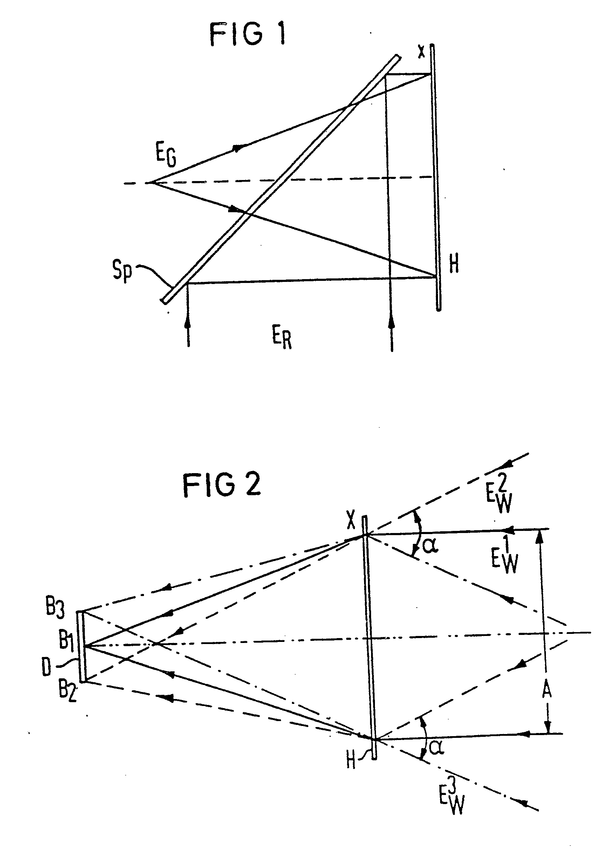

Die Fig. 1 zeigt die Herstellung eines bei der Wiedergabe sammelud wirkenden Hologramms, mittels einer Kugelwelle, in Fig. 2 ist die sammelude Wirkung des Hologramms mit großer Apertur und großem Gesichtsfeldwinkel dargestellt.

Nach Fig. 1 trifft eine kohärente Kugelwelle $E_G$, die von einem Punkt ausgeht und mittels eines Lasers erzeugt wird, auf die mit einem x gekennzeichnete Vorderseite einer holografischen Schicht H. Dieser Kugelwelle wird auf der Schicht H ein Parallelstrahlenbündel der gleichen Wellenlänge $\lambda$, eine sogenannte ebene Welle $E_R$ als kohärente Bezugswelle überlagert. Die Welle $E_R$ kann mittels desselben Lasers erzeugt werden, dessen Strahl über einen teildurchlässigen Spiegel in eine Gegenstandswelle und eine Bezugswelle aufgeteilt werden kann. Die Bezugswelle $E_R$ fällt dann nach Ablenkung über einen weiteren teildurchlässigen Spiegel Sp senkrecht auf die Vorderseite der Schicht H. Auf diese Weise entsteht durch Überlagerung eine Interferenzaufnahme einer z.B. von einem Punkt ausgehenden Kugelwelle $E_G$ und einer ebenen Welle $E_R$.

Die Fig. 2 zeigt die Rekonstruktion reeller Bildpunkte durch aus verschiedenen Richtungen einfallende monochromatische Wiedergabewellen. Diese sind wie die Bezugswelle ebene Wellen. Die Rekonstruktion kann dabei auch in einer anderen, monochromatischen Wellenlänge erfolgen als die Aufnahme, da einfache mathematische Zusammenhänge zwischen diesen beiden Wellenlängen und der Aufnahme- und Wiedergabegeometrie bestehen. In Fig. 2 ist als eine erste einfallende ebene Welle eine mit ausgezogenen Linien eingezeichnete ebene Welle $E_w^1$ vorgesehen, welche senkrecht auf die Rückseite von H trifft. Durch Beugung am Hologramm H entsteht eine Kugelwelle welche der bei der Aufnahme verwendeten Welle $E_G$ entspricht und einen reellen Bildpunkt $B_1$ auf dem Detektor D erzeugt. In entsprechender Weise werden weitere gerade noch auf die Detektorfläche fallende Bildpunkte $B_2$ und $B_3$ durch eine in der Zeichnung schräg von oben einfallende ebene Welle $E_w^2$, die gestrichelt eingezeichnet ist, bzw. durch eine schräg von unten einfallende strichpunktierte Welle $E_w^3$ erzeugt. Der Gesichtsfeldwinkel $\alpha$ des Systems sowie die Apertur A des Hologramms ergeben sich dabei durch die beiden äußersten schräg einfallenden Wellen $E_w^2$ und $E_w^3$. Das Hologramm H dient somit als ein abbildendes optisches Bauteil. Auf diese Weise wird eine Vergrößerung der Apertur des Detektors und ein großer Gesichtsfeldwinkel erreicht.

**Patentansprüche**

1. Optisches Empfangssystem, mit einem Detektor als Signalempfänger und einem optischen Hilfsmittel zur Vergrößerung der Apertur des Detektors, dadurch gekennzeichnet, daß als optisches Hilfsmittel ein dem Detektor vorgesetztes, einfallendes Licht auf die Detektorfläche sammeludes Hologramm vorgesehen ist.

2. Optisches Empfangssystem, dadurch gekennzeichnet, daß das Hologramm ein Phasenhologramm ist.

### Claims

1. An optical receiving system having a detector serving as a signal receiver and an auxiliary optical means for enlarging the aperture of the detector, characterised in that the auxiliary optical means is a hologram placed before the detector to concentrate incident light onto the detector surface.

2. An optical receiving system, characterised in that the hologram is a phase hologram.

### Revendications

1. Système récepteur optique, comprenant un détecteur servant de récepteur de signaux et un moyen optique auxiliaire destiné à agrandir l'ouverture du détecteur, caractérisé en ce qu'il est prévu comme moyen optique auxiliaire un hologramme, qui est placé devant le détecteur et qui collecte la lumière incidente sur la surface du détecteur.

2) Système récepteur optique suivant la revendication 1, caractérisé en ce que l'hologramme est un hologramme de phase.

# FIG 1

# FIG 2